# FASCICULE DE BREVET EUROPEEN

(11) **EP 0 836 000 B1**
(45) Date de publication et mention de la délivrance du brevet: **14.04.2004**
(21) Numéro de dépôt: 97402376.4
(22) Date de dépôt: 09.10.1997
(51) Int. Cl.: F02K 1/70

(54) **Inverseur de poussée à portes à débit de fuite contrôlé**
Klappenschubumkehrvorrichtung mit geregeltem Leckstrom
Blocker door thrust reverser with controlled bypass flow

(30) Priorité: 10.10.1996 FR 9612354
(43) Date de publication de la demande: 15.04.1998
(73) Titulaire: Hurel-Hispano, 76700 Gonfreville l'Orcher (FR)
(72) Inventeur: Gonidec, Patrick, 76290 - Montivilliers (FR); Rouyer, Pascal Gérard, 76430 - Saint Aubin Routot (FR); Vauchel, Guy Bernard, 76610 - Le Havre (FR)
(74) Mandataire: Berrou, Paul

(56) Documents cités:
- EP-A- 0 368 725
- EP-A- 0 413 635
- EP-A- 0 728 933
- FR-A- 2 618 853
- US-A- 2 847 823
- US-A- 3 601 992

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autre cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas dans ce cas d'ensembles propulsifs rapportés sur l'extérieur d'aéronef, particulièrement lorsque ces ensembles propulsifs sont attachés sous les ailes ou à l'arrière du fuselage.

Nous appellerons capotage extérieur, l'ensemble constitué par la paroi extérieure de la nacelle

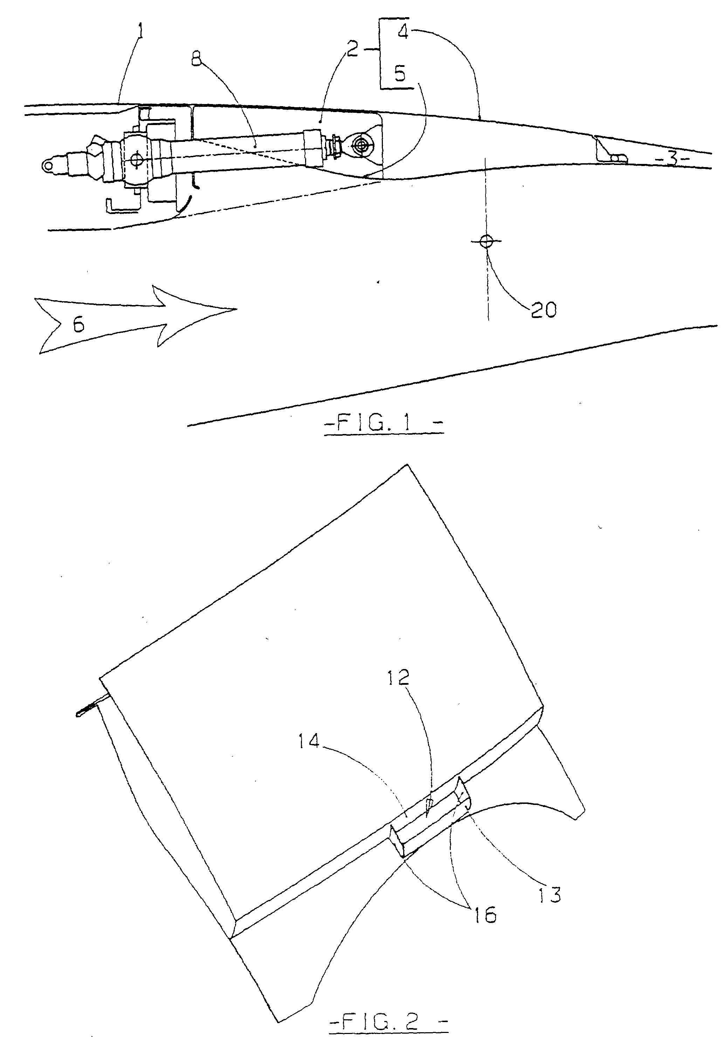

La figure 1 des dessins joints montre un exemple connu de réalisation d'un inverseur de poussée de ce type, appliqué à un turboréacteur à double flux.

Le dispositif d'inversion est constitué de portes 2 formant une partie mobile et constituant en position inactive, lors d'un fonctionnement en jet direct, une partie du capotage extérieur, et d'une structure fixe réalisant ce capotage extérieur en amont des portes, par une partie amont 1 et en aval des portes par une partie aval 3 et entre les portes 2 par l'intermédiaire de poutres qui relient la partie aval 3 du capotage extérieur à la partie amont du capotage extérieur. Les portes 2 sont montées sur une circonférence du capotage extérieur et sont montées pivotantes dans une zone intermédiaire de leurs parois latérales sur les poutres situées de part et d'autre de ces portes, ces parois latérales constituant avec les parois amont et aval, les parois qui relient la partie extérieure 4 des portes 2, qui constituent une partie de la paroi extérieure de la nacelle, à la partie intérieure 5 des portes 2, qui constituent une partie de la paroi extérieure du conduit.

La partie amont 1 de structure fixe comporte un cadre avant qui sert de support aux moyens de commande des déplacements des portes 2, constitués par exemple par des vérins 8.

En position activée, les portes 2 basculent de telle façon que la partie des portes situées en aval des pivots 20, vient obstruer plus ou moins totalement le conduit, et de telle façon que la partie amont des portes vient dégager un passage dans le capotage extérieur de manière à permettre au flux secondaire d'être canalisé radialement par rapport à l'axe du conduit. La partie amont des portes 2 fait saillie à l'extérieur du capotage extérieur pour des raisons de dimensionnement du passage qui doit être capable de laisser passer ce flux sans compromettre le fonctionnement du moteur.
L'angle de pivotement des portes est ajusté de manière à permettre le passage du flux et de manière à supprimer la poussée de ce flux, voire à commencer à générer une contre poussée en générant une composante du flux dévié vers l'amont.
Des exemples connus de réalisation sont illustrés par exemple par FR-1.482.538, FR-A-2.030.304 ou US 3.605.411.
En outre, EP-A-0 368 725 décrit un inverseur de poussée dans lequel une porte pivotante comporte un passage interne ménagé entre le panneau interne et le panneau externe de porte, présentant unè ouverture à chaque extrémité de manière à créer une séparation du flux inversé et un volet mobile peut être adjoint à l'ouverture aval du passage.
Dans le type d'inverseur de poussée décrit ci-dessus, les portes basculent de telle sorte que la partie située en aval des pivots, vient obstruer plus ou moins totalement le conduit lors de la phase jet inversé.

Toutefois, si dans certaines applications il est intéressant d'obstruer au maximum le conduit lors de la phase jet inversé, cela peut dans d'autres cas, en fonction de paramètres aérodynamiques et géométriques particuliers, être un inconvénient, et il peut s'avérer utile d'un point de vue aérodynamique d'autoriser un débit de fuites plus ou moins important tout en ayant la possibilité ou non de réduire, voire de supprimer la poussée résiduelle engendrée par ces fuites.
Un des buts de l'invention est de proposer un moyen autorisant un débit de fuite contrôlé lors d'un fonctionnement en inversion de flux, tout en réduisant, voire en supprimant la poussée résultante dudit débit de fuite.
Un des buts de l'invention est également de permettre, dans certaines applications, de récupérer totalement ou partiellement les fuites crées afin de générer une contre-poussée additionnelle à la contre-poussée principale obtenue par l'inversion du flux.
Ces buts sont atteints, conformément à l'invention, par un inverseur de poussée du type précité caractérisé en ce qu'au moins une porte comporte en zone aval un passage traversant complètement la partie intérieure et la partie extérieure de porte et dont la géométrie est adaptée de manière à autoriser un flux de fuite à l'arrière et à l'extérieur de la porte d'un débit et de direction contrôlés lors du fonctionnement en inversion de poussée, des moyens obturant ledit passage lors du fonctionnement en jet direct de manière à assurer la continuité de la surface radialement extérieure du conduit de flux.
En fonction des applications particulières, ledit passage peut être constitué par un orifice ménagé dans la structure aval de la porte et obstrué en jet direct par un volet mobile solidaire de la porte ou par un carénage solidaire de la structure fixe de l'inverseur.
Lorsque la porte d'inverseur est associée à un panneau aval, ledit passage est ménagé entre l'extrémité aval de la porte et ledit panneau aval qui assure un guidage du flux de fuite lors du fonctionnement en inversion de poussée.
Lorsque la porte d'inverseur constitue l'extrémité aval de l'inverseur, le guidage du flux de fuite lors du fonctionnement en inversion de poussée est assuré par un volet mobile qui forme en jet direct l'extrémité aval de la ligne extérieure de l'inverseur et de la surface extérieure délimitant le conduit annulaire de circulation de la veine du flux direct.
D'autres caractéristiques et avantages de l'inventions seront mieux compris à la lecture de la description qui va suivre des modes de réalisation de l'invention, en référence aux dessins annexés sur lesquels :
- la figure 1 représente une demi-vue schématique, en coupe longitudinale par un plan passant par l'axe de rotation d'un turboréacteur associé, d'un inverseur de poussée à portes pivotantes, en position jet direct, d'un type connu et qui a fait précédemment l'objet d'une description ;
- la figure 2 montre une vue en perspective d'une porte d'un inverseur de poussée suivant un premier mode de réalisation de l'invention ;
- les figures 3, 5, 7 et 19 représentent dans une vue analogue à celle de la figure 1, un inverseur de poussée à portes pivotantes suivant un premier mode de réalisation de l'invention,
- les figures 4, 6, 8 et 20 représentent les mêmes principes définis sur les figures 3, 5 et 7 en position jet inversé ;
- les figures 9, 11, 13 et 23 représentent, dans une vue analogue à celle de la figure 1 les variantes d'un second mode de réalisation de l'invention associé à un inverseur à portes d'un type connu équipé d'un panneau aval ;
- les figures 10, 12, 14 et 24 représentent les mêmes principes définis sur les figures 11, 13 et 15 en position jet inversé ;
- la figure 15 représente dans une vue analogue à celle de la figure 1, un troisième mode de réalisation de l'invention associé à un inverseur équipé de portes dont l'extrémité aval desdites portes constitue également l'extrémité aval de l'inverseur ;
- la figure 16 représente le principe défini sur la figure 15 en position jet inversé ;
- les figures 17 et 18 représentent un quatrième mode de réalisation de l'invention dont la mise en fonctionnement est indépendante ou non de la cinématique d'ouverture de la porte;
- les figures 21 et 22 représentent un cinquième mode de réalisation de l'invention ;
- la figure 25 représente un sixième mode de réalisation de l'invention ;
- les figures 26 et 27 représentent une variante du cinquième mode de réalisation de l'invention représenté sur les figures 21 et 22.

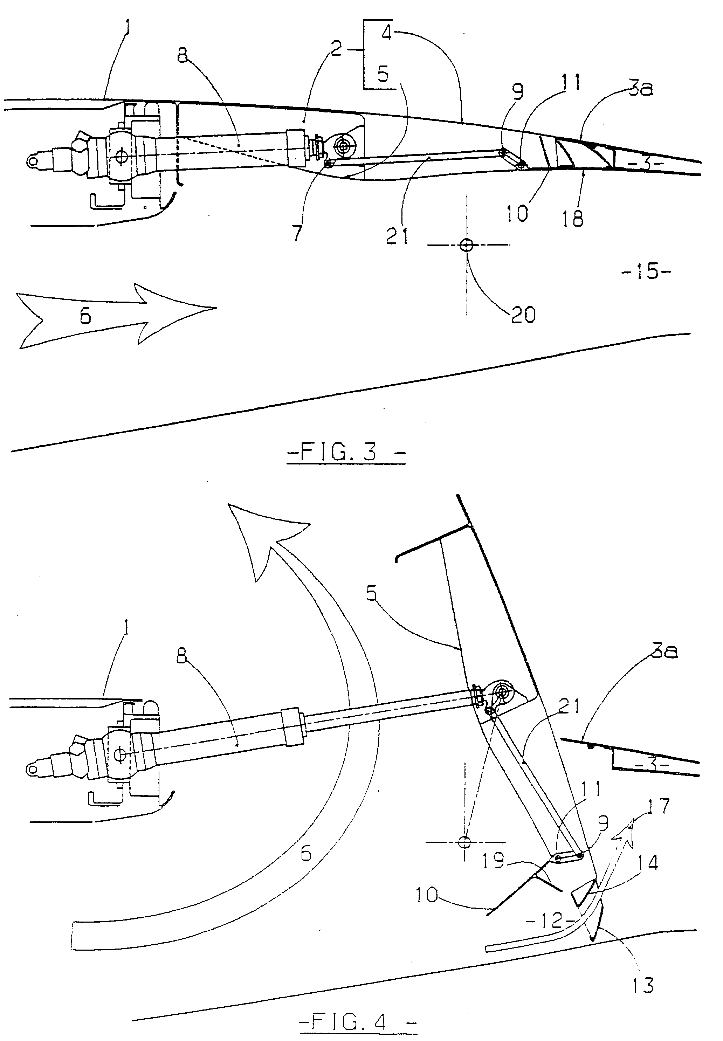

Selon un premier mode de réalisation de l'invention représenté sur les figures 2, 3 et 4, une porte 2 dont la paroi externe 4 constitue en position jet direct une partie de l'enveloppe extérieure de la nacelle, sa paroi intérieure 5 constituant une partie de la paroi de veine externe du canal annulaire 15 formant le conduit de flux comporte dans sa partie aval un volet mobile 10 articulé autour d'un axe pivot 11 solidaire de ladite porte. En vis à vis du volet 10, la structure aval de la porte 2 comporte un orifice 12 localisé entre les deux voiles 13 et 14, le voile amont 14 pouvant constituer l'extrémité aval de la partie structurale de la porte reliant la paroi externe 4 à la paroi interne 5, tandis que le voile aval 13 a pour fonction principale de dévier et de piloter le débit de fuite 17 en position jet inversé. Comme le montre la figure 2, entre ces deux voiles, peuvent être implantés dans le sens longitudinal, plusieurs voiles 16 parallèles ou non entre eux en position convergente ou divergente, de façon symétrique ou non par rapport à l'axe milieu de la porte 2, en fonction des effets aérodynamiques recherchés en phase jet inversé.
En phase jet direct, la position du volet mobile 10 est telle que son profil externe 18 situé dans le conduit 15 assure la continuité du profil interne 5 de la porte 2 tout en obstruant totalement l'orifice 12, l'étanchéité étant assurée par un joint qui peut être de type torique, situé tout autour de la périphérie de l'orifice 12 soit sur le volet mobile 10 soit sur la porte 2. La continuité de l'enveloppe extérieure de nacelle est assurée par un rebord 3a de la structure fixe aval 3 de l'inverseur qui obture l'orifice 12.

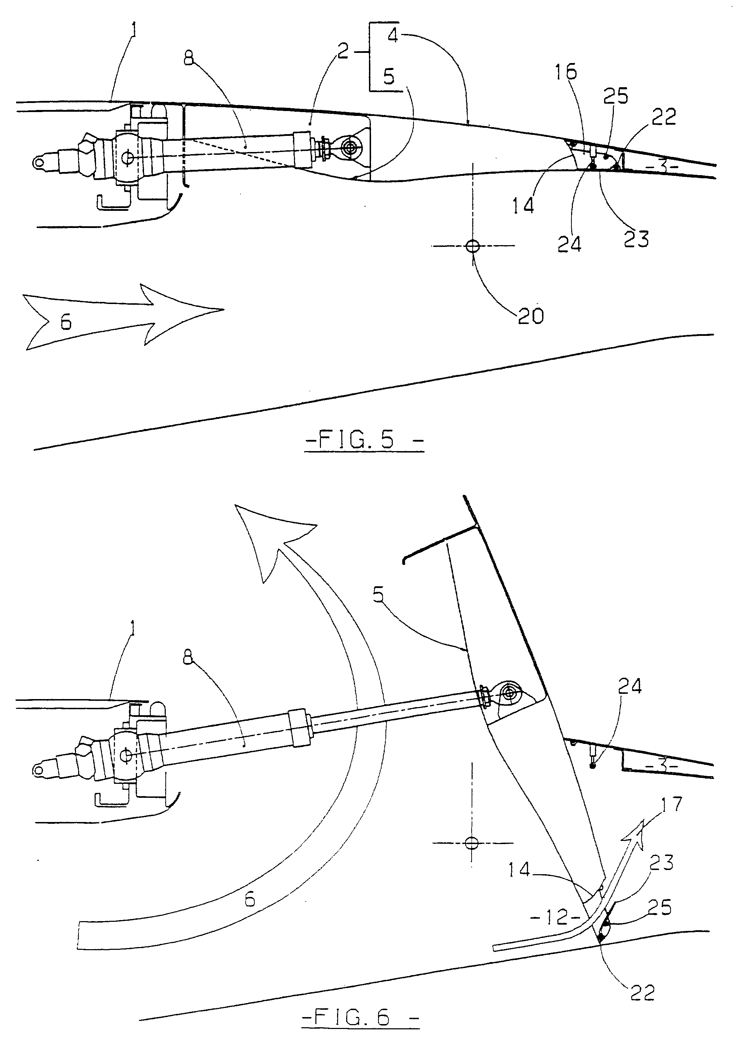

La manoeuvre du volet 10 est réalisée par l'intermédiaire d'au moins une bielle de commande 21, dont l'une de ses extrémités est solidaire de l'élément de manoeuvre 8 de la porte 2 en un point pivot 7, l'autre extrémité étant solidaire du volet mobile 10 au point 9.
En position jet inversé, la majeure partie du flux 6 se trouve déviée par le profil interne 5 de la porte 2,tandis que le volet mobile 10 pivotant autour de son axe 11, dégage l'orifice 12, permettant ainsi le passage d'un flux de fuite 17 entre les voiles 14 et 13, ce dernier déviant le flux 17 dans une direction définie permettant de supprimer la poussée résiduelle. Il est à noter que l'orientation du volet mobile 10 ainsi que la position de son extrémité aval, sont telles qu'elles contribuent avec l'aide d'un déflecteur 19 situé sur le profil interne dudit volet, à canaliser le débit de fuite vers l'orifice 12. On peut envisager un positionnement du volet 10 et de son point pivot 11 proche de la paroi 14 de façon à supprimer le déflecteur 19.
On notera également qu'en fonction des performances aérodynamiques désirées en mode jet inversé, chaque porte peut être équipée d'un ou plusieurs volets mobiles 10, implantés en vis à vis d'une ou plusieurs ouvertures réalisées dans la paroi interne de ladite porte. L'implantation des volets et des ouvertures correspondantes peut être réalisée de façon symétrique ou non par rapport à l'axe milieu de la porte, sur toute ou une partie de sa largeur.
Selon une variante de réalisation de l'invention représentée sur les figures 5 et 6, une porte 2 est équipée dans sa partie aval d'un ou plusieurs orifice(s) 12 obstrué(s) en position jet direct par un volet mobile 23 articulé autour d'un axe 22 solidaire de la porte 2 dans sa partie aval entre deux voiles longitudinaux 16. Une butée réglable 24 solidaire de la partie aval 3 de la structure fixe, assure, lors de la refermeture de la porte 2, la refermeture du volet 23.
Lors de l'ouverture de la porte 2, l'effet de la pression tend à ouvrir le volet 23 dégageant l'orifice 12 permettant ainsi l'évacuation d'un flux de fuite 17, canalisé par la paroi aval 14 de la porte 2, les voiles 16 et le volet 23, dont la position d'ouverture optimale est telle que le flux 17 se trouve dévié afin de réduire, voire de supprimer, la poussée résiduelle engendrée par ledit flux. Une butée 25 fixe ou réglable garantit la position optimale du volet 23 en jet inversé. On notera, qu'un système d'aide à l'ouverture ou à la fermeture, tel un ressort de torsion monté sur l'axe 22, peut être associé au volet 23 afin de faciliter son ouverture dès le début de la phase jet inversé, ou sa refermeture ou son ouverture contrôlée progressive suivant la valeur de la pression statique du bas de porte.

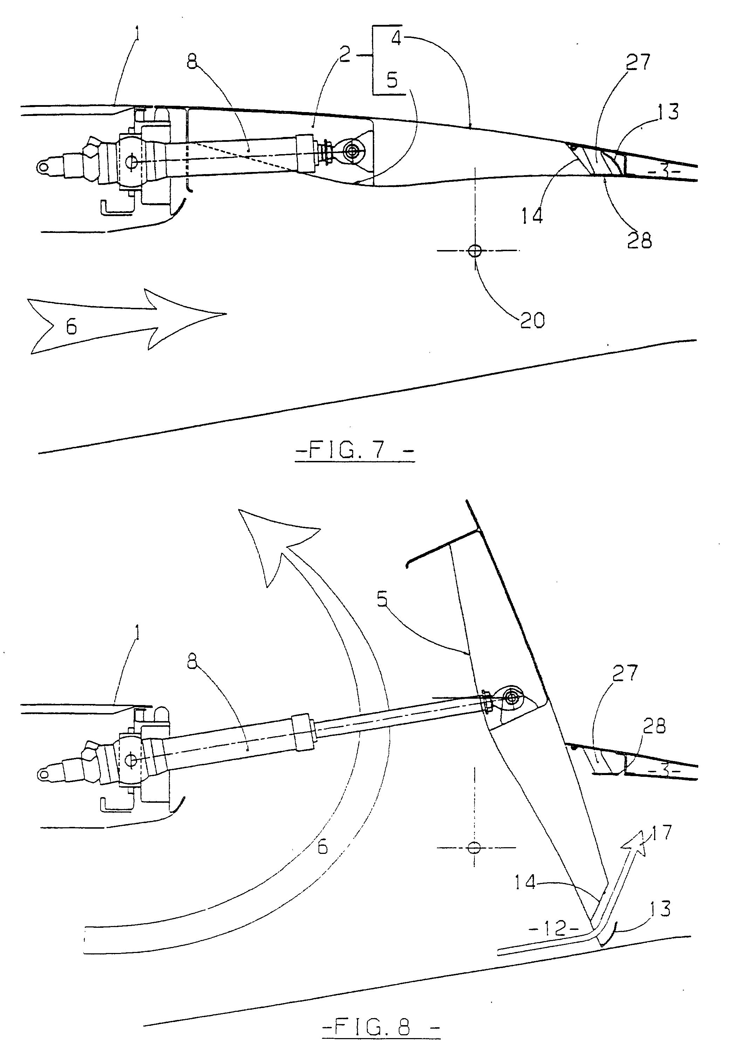

Les figures 7 et 8, représentent une variante possible de réalisation dans laquelle l'orifice 12 du panneau interne de la porte 2 situé dans la partie aval entre les voiles 14 et 13, est obstrué en phase jet direct par un carénage 28 assurant la continuité du profil externe du canal annulaire 15, le contour dudit carénage étant approprié au détourage de l'orifice 12. Chaque carénage 28 est relié au corps arrière de la structure fixe par l'intermédiaire d'un ou plusieurs supports 27.

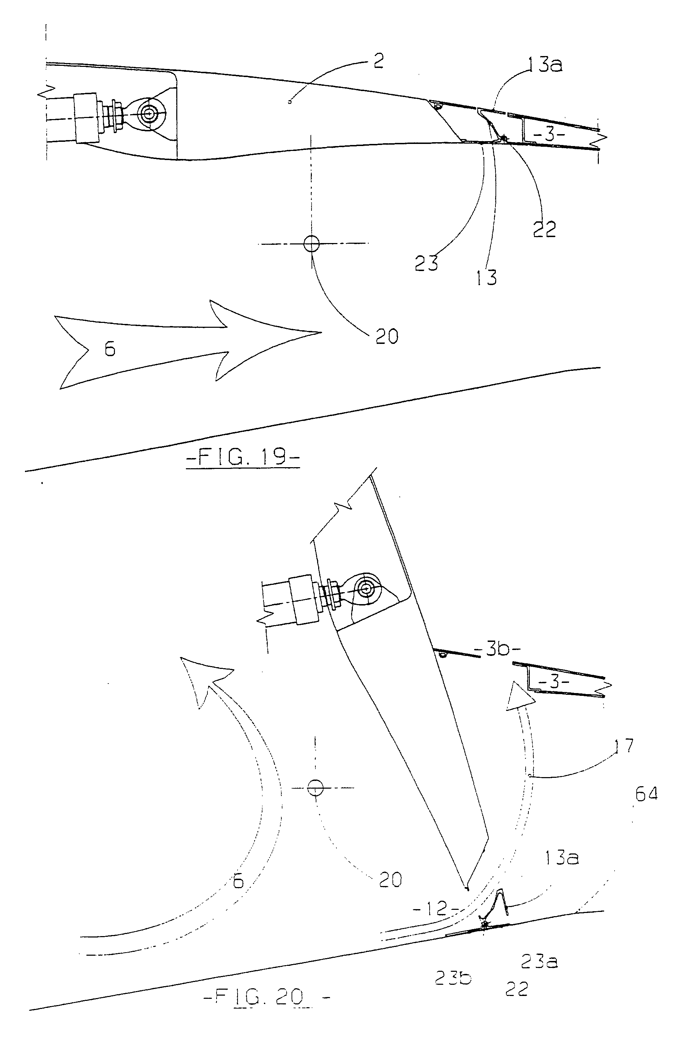

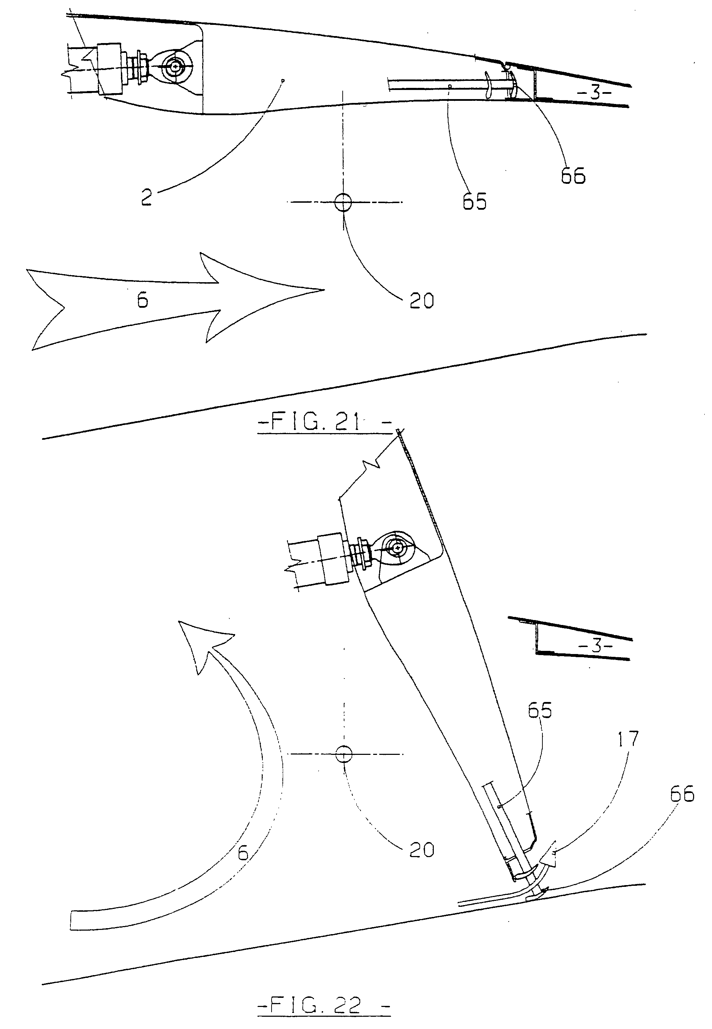

Selon la variante de réalisation représentée sur les figures 19 et 20, la définition géométrique du volet 23 est telle que durant la phase d'inversion de jet, son extrémité aval 23a en prenant appui sur le profil externe du capot primaire 64, l'entraîne en rotation autour de l'axe 22 libérant ainsi le passage 12. On notera également la possibilité d'ajouter au déflecteur 13 un voile 13a qui libère lors de l'ouverture de la porte l'orifice 3b réalisé dans le rebord 3a de la structure fixe 3, et assure en position jet direct la continuité du profil externe de cette dernière. Le volet 23 peut être également commandé par tout autre moyen connu de l'homme du métier, de manière à le faire pivoter autour de l'axe 22 lors de l'ouverture de la porte 2.

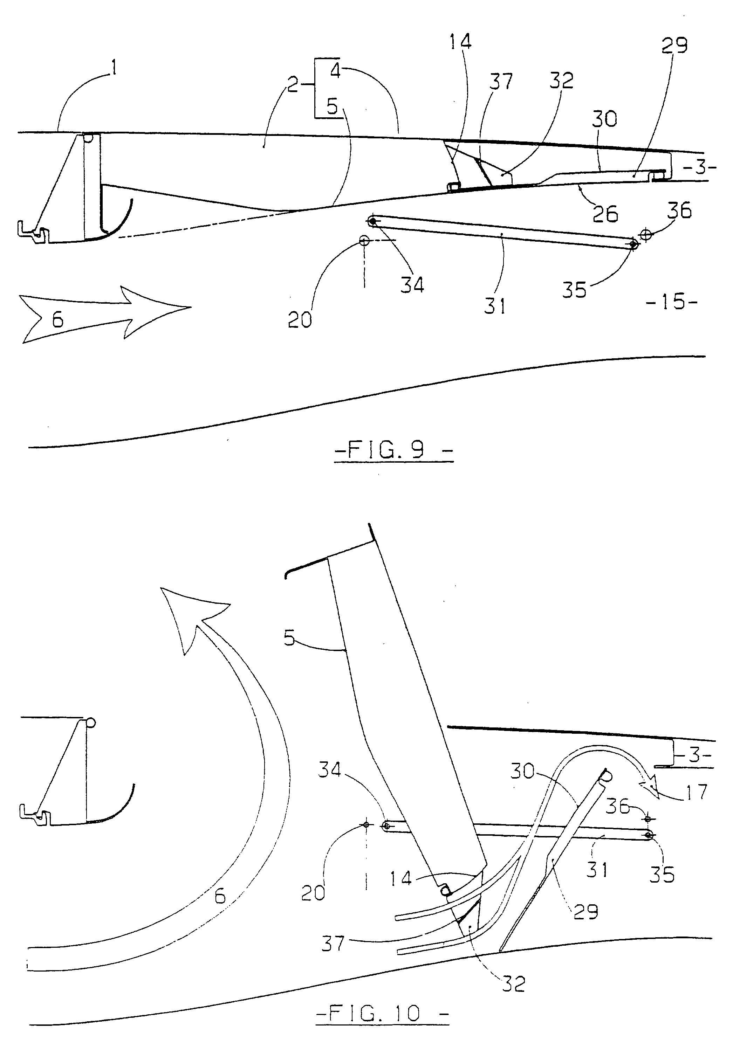

L'invention va maintenant être décrite en référence aux figures 9 à 14 dans le cas d'une application à un inverseur de poussée à portes associées à un panneau aval comme décrit dans la demande de brevet français N° 2 730 764 constituant un second mode de réalisation.

Selon une première variante du second mode de réalisation de l'invention décrit sur les figures 9 et 10, lors de l'ouverture de la porte 2, un panneau aval 29 est entraîné en rotation vers l'amont autour d'un axe pivot 36 par l'intermédiaire d'au moins une bielle latérale 31 solidaire de la porte au point 34 et reliée au panneau aval 29 au point 35. Le panneau interne 5 de la porte 2 est limité dans sa partie aval par la paroi 14 de telle sorte, qu'en position jet inversé un flux de fuite 17 puisse circuler entre la paroi 14 et le profil interne du canal annulaire. En aval de la paroi 14 peuvent être implantés, dans le sens longitudinal, plusieurs voiles 32 parallèles ou non entre eux en position convergente ou divergente de façon symétrique ou non par rapport à l'axe milieu de la porte 2, en fonction des effets aérodynamiques recherchés en phase jet inversé. Pour les mêmes raisons, un ou plusieurs voiles longitudinaux 37 de profil et d'orientation appropriés aux effets recherchés, peuvent être implantés entre les voiles 32.
La position des points 34 et 35 ainsi que la longueur de la bielle 31, sont des paramètres tels qu'ils définissent une cinématique positionnant le panneau aval 29 en mode jet inversé, de telle sorte que son extrémité amont se trouve proche, voire en contact avec le profil interne du canal annulaire 15, et suivant, une orientation assurant la déviation du flux de fuite 17 par le profil externe 30 dudit panneau aval. De plus, en mode jet direct, la cinématique ainsi définie, positionne le panneau aval 29 d'une façon telle, qu'il assure l'étanchéité tant avec la porte 2 qu'avec la structure aval 3 et que le profil interne 26 assure la continuité du profil externe du canal annulaire.

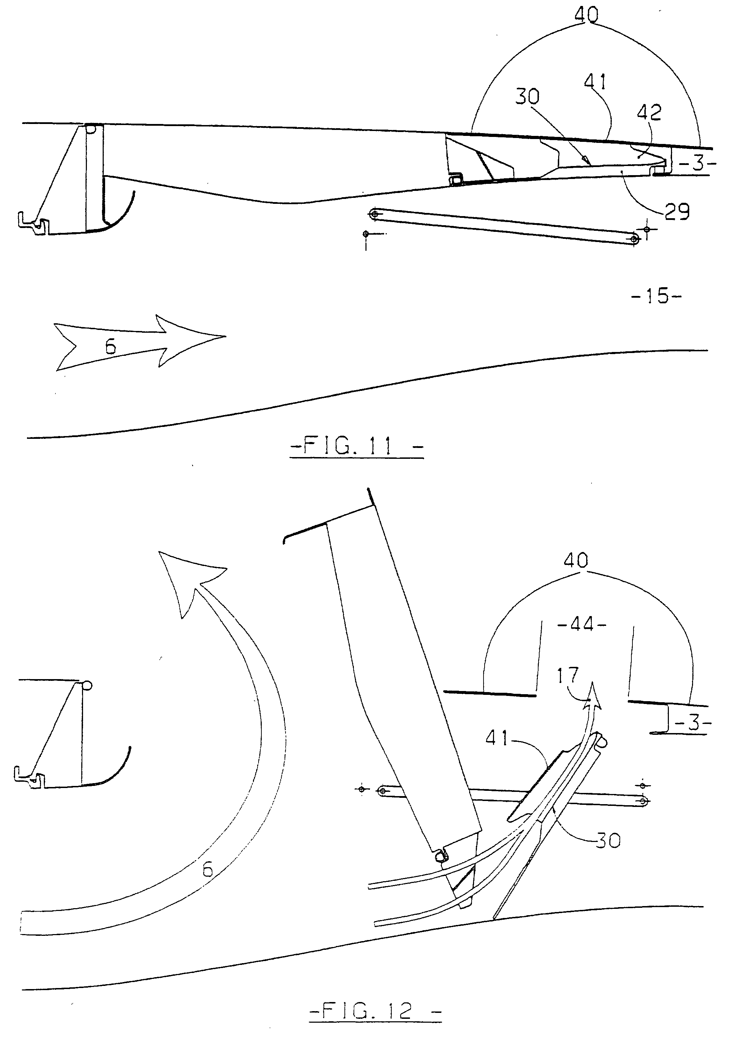

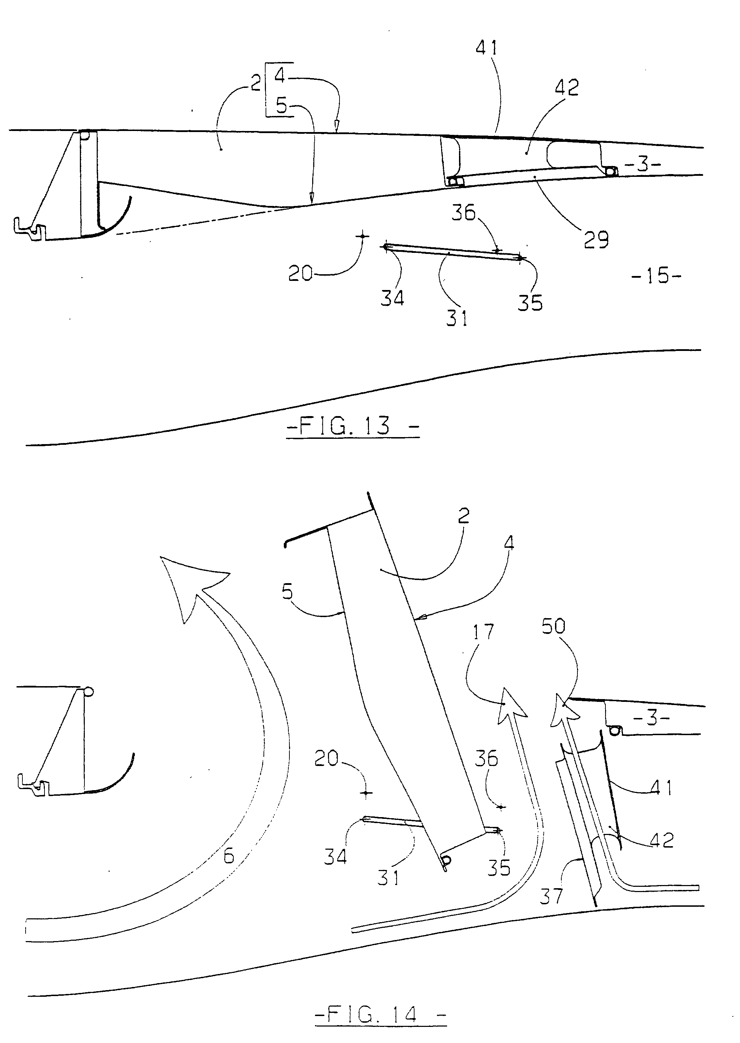

Les figures 11 et 12, représentent une variante possible du mode de réalisation de l'invention décrit précédemment selon laquelle, une partie 41 du capotage 40 du corps arrière 3 se trouve reliée au panneau aval 29 par l'intermédiaire d'un ou plusieurs voiles 42 améliorant ainsi le pilotage du flux de fuite 17 lors de la phase jet inversé, autorisant par la même occasion son évacuation directement par l'ouverture 44 résultant du basculement du capot 41. Une forme appropriée de la face interne 30 du panneau permet d'orienter le flux 17 selon une direction définie permettant de supprimer la poussée résiduelle, voire de générer une contre poussée additionnelle.
Les figures 13 et 14 représentent une autre variante possible du mode de réalisation de l'invention décrit précédemment dans laquelle, les paramètres définissant la cinématique d'entraînement du panneau aval 29 sont tels que la rotation du panneau s'effectue vers l'aval, de telle sorte qu'en position jet inversé, l'obturation du canal annulaire 15 est réalisée par l'extrémité aval du panneau aval 29. Dans le même temps, le flux de fuite 17 se trouve canalisé vers l'extérieur de la nacelle entre la paroi externe 4 de la porte 2 et la paroi interne 37 du panneau aval 29. L'axe de pivot du panneau peut être fixe comme dans l'exemple montré, ou mobile (lié à la porte) comme décrit dans le brevet français n° 2 741 910 dans lequel le flux de fuite 17 pourrait être canalisé, en position jet inversé, entre l'extrémité aval de la porte et l'extrémité amont du panneau aval.
De plus, il est à noter qu'un phénomène d'aspiration d'air relativement froid 50, provenant de l'extrémité aval de la nacelle par un passage pratiqué au travers du panneau entre les voiles 42 selon le besoin, peut être généré par effet d'entraînement par le flux 17, et peut induire une légère mise en dépression du canal annulaire 15 lors de la phase jet inversé en aval des portes. Cet écoulement 50 peut être utilisé en fonction des effets aérodynamiques recherchés, pour favoriser l'évacuation et/ou le refroidissement du flux de fuite 17 pour engendrer une contre poussée supplémentaire et/ou améliorer le refroidissement de la partie arrière du capot moteur 64 par l'écoulement 50.

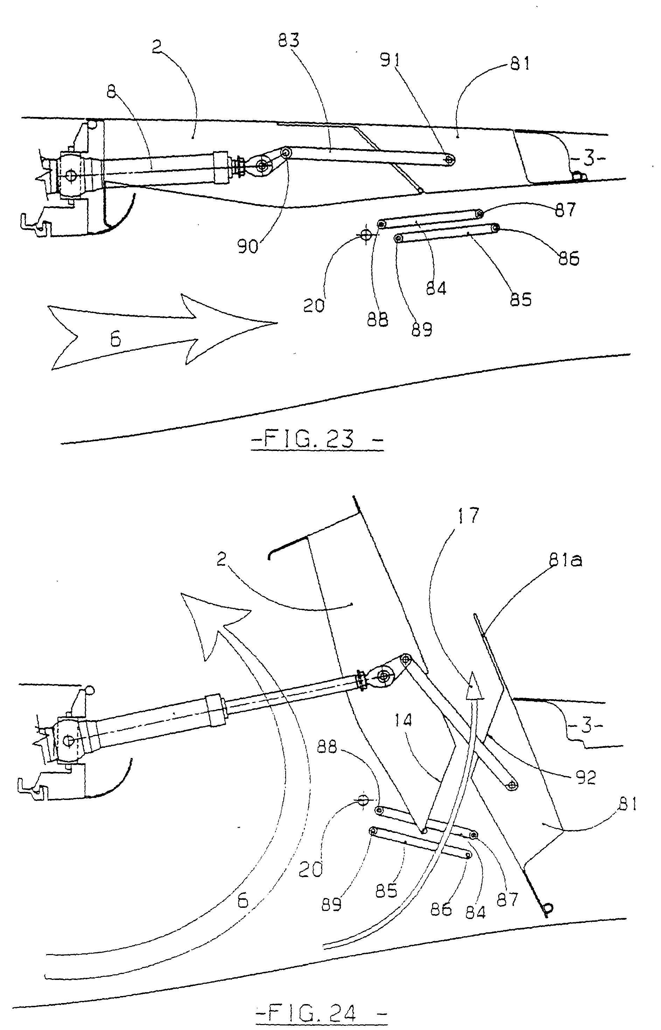

Les figures 23 et 24 représentent une autre variante du mode de réalisation de l'invention associée à un panneau aval 81, ce dernier n'ayant pas de pivot fixe par rapport à la structure fixe de l'inverseur. Dans ce mode de réalisation, lors de la phase d'ouverture de la porte 2, une cinématique appropriée décale le panneau aval 81 vers l'extérieur de la porte 2 afin de créer un passage entre la paroi aval 14 de la porte 2 et la paroi frontale 92 du panneau 81, autorisant ainsi le passage du flux de fuite 17.
Sur les figures 23 et 24, un exemple de cinématique garantissant le déplacement du panneau 81, est constitué d'une bielle de commande 83, dont l'une de ses extrémités est solidaire de l'élément de manoeuvre 8 de la porte 2 en un point pivot 90, l'autre extrémité étant solidaire du panneau aval 81 au point 91, et d'un parallélogramme constitué d'au moins une paire de bielles 84 et 85 respectivement solidaires de la porte 2 aux points 88 et 89, et au panneau aval 81 aux points 87 et 86. D'autres cinématiques connues de l'homme du métier peuvent être envisagées pour la manoeuvre du panneau aval 81.
En fonction des effets aérodynamiques recherchés et de la cinématique retenue, le panneau aval mobile 81 peut comporter dans sa partie amont, au niveau de son profil externe, un capotage 81a, dont le but est d'améliorer le pilotage du flux de fuite 17, et d'assurer la continuité du profil externe de la porte 2 lorsque cette dernière possède dans son profil externe une découpe permettant le débattement de la bielle de commande 83.

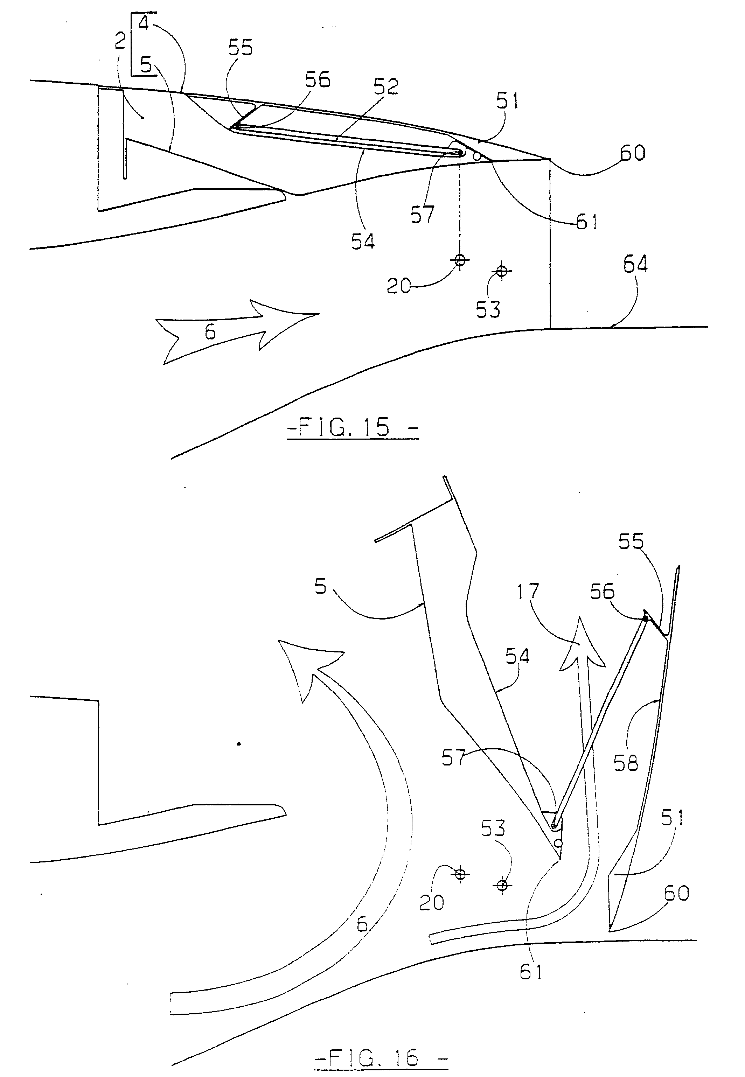

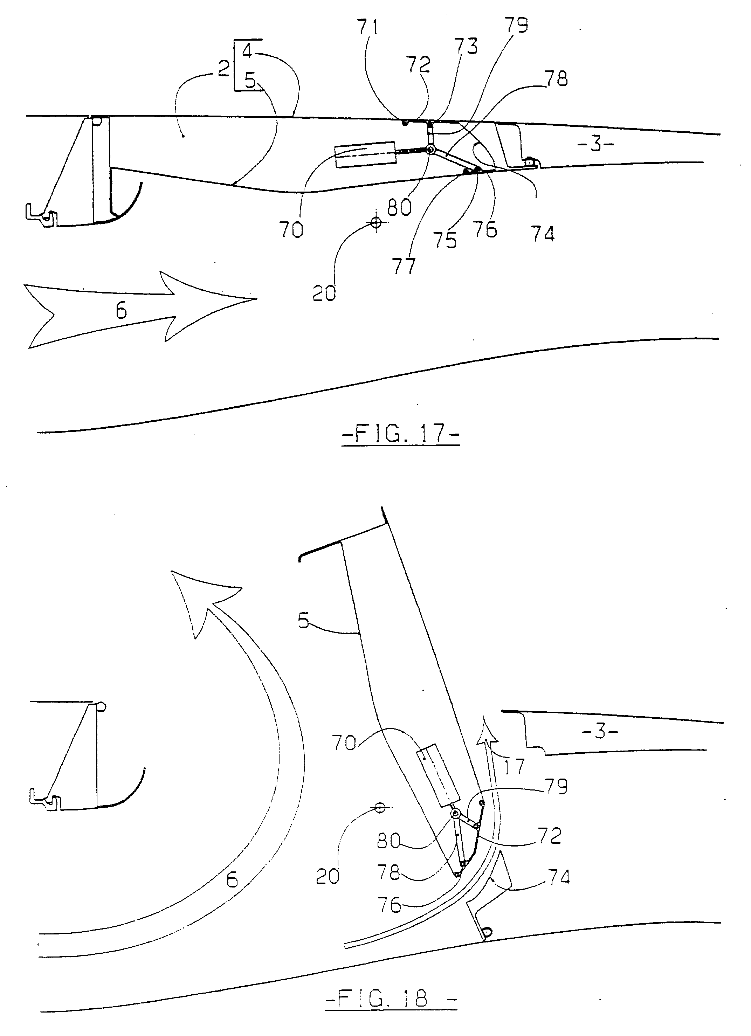

Les figures 15 et 16, représentent un troisième mode de réalisation de l'invention associé à un inverseur équipé de portes dont l'extrémité aval 60 desdites portes constitue également l'extrémité aval de l'inverseur, configuration particulière que l'on peut rencontrer par exemple dans le cas d'inverseur à très grand taux de dilution. Dans ce mode de réalisation, la porte 2 possède au niveau de son profil externe 4, une cavité 54 permettant le logement d'un volet mobile 51 articulé autour d'un axe pivot 53 généralement situé proche de l'axe de rotation 20 de la porte 2 dans les poutres latérales de la structure fixe de l'inverseur.
Ces figures montrent un exemple de réalisation possible de manoeuvre du volet 51 constitué par une bielle centrale 52, logée en position jet direct dans la cavité 54, ladite bielle ayant l'une de ses extrémités reliée au volet 51 au point 56, l'autre extrémité étant solidaire de la porte 2 au point pivot 57. Une position latérale des bielles 51 est également possible. La position des points 20, 53, 56 et 57, ainsi que la longueur de la bielle 52, sont des paramètres tels qu'ils définissent une cinématique positionnant le volet mobile 51 en mode jet inversé, de telle sorte que son extrémité aval 60 se trouve proche, voire en contact avec le profil interne du capot primaire 64, et suffisamment éloigné en aval de l'extrémité aval 61 de la porte 2, de façon à permettre l'évacuation d'un débit de fuite 17, canalisé par le profil interne 58 et le becquet 55 du volet mobile 51.
Les figures 15 et 16 montrent que l'axe de rotation du volet mobile 51 est différent de l'axe de rotation 20 de la porte 2, mais l'on peut envisager un axe de rotation commun pour ces deux éléments, le déplacement du volet 51 étant dans ce cas assuré par un système de type parallélogramme. De même l'axe de rotation 53 du volet mobile 51 peut être solidaire de la porte 2, une des extrémités de la bielle 52 étant dans ce cas rattachée à la structure fixe.
On notera que le profil interne du volet 51 peut également comporter des ouvertures obstruées en jet direct par des caches solidaires de la porte 2 et reformant le profil externe de la nacelle.
Les figures 17 et 18, représentent un quatrième mode de réalisation de l'invention, caractérisé par un fonctionnement indépendant ou non de la cinématique d'ouverture de la porte, cette dernière étant équipée de deux volets mobiles, le premier 72 situé au niveau du profil extérieur 4 et relié à la porte au niveau de l'axe 71, le second 76 situé au niveau du profil intérieur 5 et relié à la porte au niveau de l'axe 77.
A l'intérieur de la porte 2, et en aval d'une paroi 74 qui relie les profils extérieur 4 et intérieur 5, est installé un vérin 70 dont la mise en service entraîne en rotation vers l'intérieur de la porte, les volets 72 et 76 respectivement autour des axes 71 et 77 par l'intermédiaire des bielles 79 et 78. La bielle 79 est solidaire du vérin 70 au point 80 et au volet 72 au point 73, la bielle 78 étant solidaire du vérin 70 au point 80 et au volet 76 au point 75.
La position des volets 72 et 76, réglable en fonction de la course du vérin 70, est telle qu'ils libèrent respectivement au niveau du profil extérieur 4 de la porte 2 ainsi qu'au niveau de son profil intérieur 5, un passage et qu'ils se positionnent de façon à former en aval de la paroi 74 et avec l'aide de cette dernière un conduit d'évacuation permettant l'écoulement d'un débit de fuite 17.
Il est à noter qu'en fonction de la géométrie de la porte et des effets aérodynamiques recherchés, plusieurs ensembles constitués d'un vérin 70, des volets 72 et 76 et des bielles 79 et 78, peuvent être installés à des endroits judicieusement choisis afin d'obtenir un effet optimal.
On notera également, que la mise en action du vérin 70 peut se faire à n'importe quel moment de la phase d'inversion de jet, voire même avant le début de l'ouverture de la porte. Dans une autre variante les volets 72 et 76 peuvent être assujettis àl'ouverture de la porte par une cinématique appropriée, ne faisant pas intervenir de vérins supplémentaire.
Selon le but recherché, l'ouverture pratiquée dans la porte (suivant le principe de la présente invention) peut être située en n'importe quel point de la porte. En particulier, l'écoulement 17 peut être évacué d'une zone située plus haut sur la porte par exemple dans la cassure ou dans la cavité.

Les figures 21, et 22, représentent un autre mode de réalisation de l'invention, caractérisé par la présence d'au moins une structure 65 mobile par rapport à la porte 2, cet élément comportant au moins une aube déflectrice 66. Lors de la phase d'inversion de jet, un mécanisme de commande non représenté, pouvant être soit un élément de commande indépendant de type vérin électrique, hydraulique ou pneumatique, soit assujetti à l'ouverture de la porte par une cinématique appropriée, assure le déplacement en translation de l'élément 65 jusqu'à une position telle que l'aube 66 se trouve en aval de l'extrémité aval de la porte, de façon à pouvoir par son profil interne dévier le flux de fuite 17. Lors de la phase de refermeture de la porte, le même mécanisme rétracte la structure mobile 65 vers l'amont de la porte de façon à éviter toute interférence avec la partie arrière 3 de la nacelle. On notera que l'élément mobile 65 peut être une grille d'aubes à simple ou double cambrure.

L'application du mode de réalisation de l'invention décrit ci-dessus, peut être appliquée dans le cas d'un inverseur dont l'extrémité aval des portes constitue également l'extrémité aval de la partie externe de la nacelle, dans ce cas la structure mobile 65 comporte dans sa partie aval, un capotage 68 assurant en position jet direct la continuité de l'extrémité aval de la partie externe de la nacelle, comme représenté sur les figures 26 et 27.

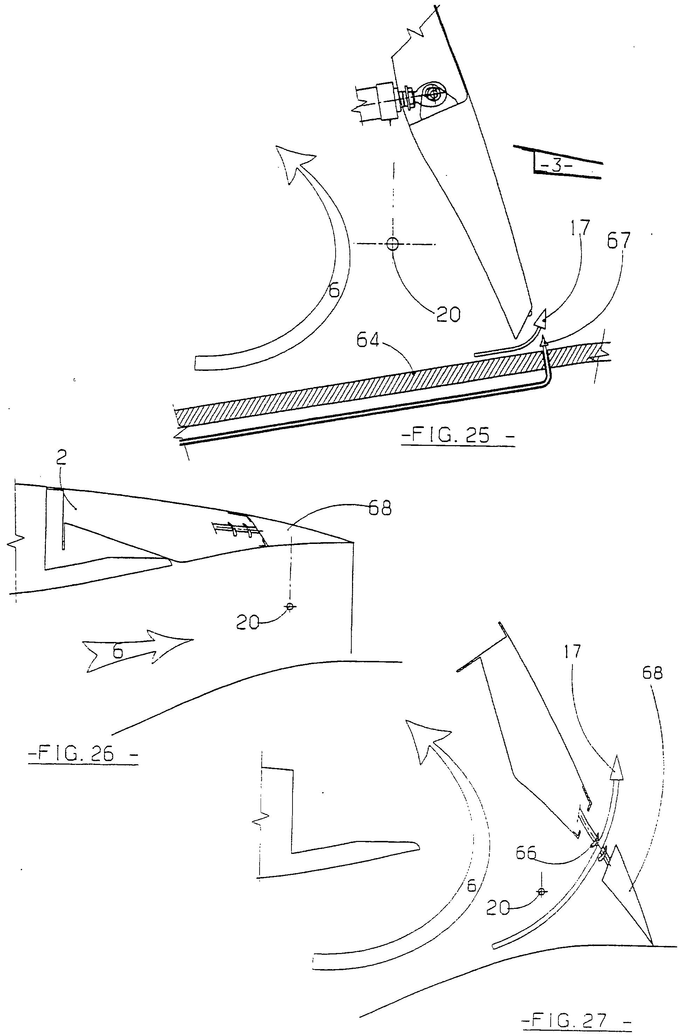

La figure 25 représente en position jet inversé, un autre mode de réalisation de l'invention, caractérisé par le fait que le flux de fuite 17 autorisé entre toute ou partie de l'extrémité aval de la porte 2 et le capot primaire 64, se trouve dévié par un ou plusieurs jet d'air 67 prélevé(s) au niveau du flux primaire, ou autre source d'air comprimé haute pression disponible. Le débit de chaque jet d'air 17, ainsi que leur localisation longitudinale et radiale sont définis pour obtenir une déviation optimale du flux de fuite 17.

Bien sûr, certains systèmes ou/et certaines configurations peuvent être utilisés seuls ou en association entre-eux.

Il est à noter que l'invention peut s'appliquer à un inverseur à grilles et notamment aux panneaux d'obturation du flux en jet inversé.

## Revendications

1. Inverseur de poussée de turboréacteur à double flux comportant des portes pivotantes (2), en position fermée, lors d'un fonctionnement en jet direct, s'intégrant dans la paroi extérieure du conduit de flux en arrière de la soufflante de turboréacteur, étant constituées d'une partie extérieure (4) et d'une partie intérieure (5) et en outre chacune pivotant autour de pivots (20) portés par la structure fixe de l'inverseur sous l'action d'un moyen de commande des déplacements tel qu'un vérin (8) de manière à constituer des obstacles de déviation de flux lors d'un fonctionnement en inversion de poussée **caractérisé en ce qu'**au moins une porte (2) comporte en zone aval un passage (12) traversant complètement la partie intérieure (5) et la partie extérieure (4) de porte et dont la géométrie est adaptée de manière à autoriser un flux de fuite (17) à l'arrière et à l'extérieur de la porte (2), d'un débit et de direction contrôlés lors du fonctionnement en inversion de poussée, des moyens (10) obturant ledit passage (12) lors du fonctionnement en jet direct de manière à assurer la continuité de la surface (18) radialement extérieure du conduit (15) de flux.

2. Inverseur de poussée de turboréacteur à double flux selon la revendication 1 dans lequel la partie intérieure de la porte comporte du côté aval un volet mobile (10; 23), articulé autour d'un axe pivot (11; 22) solidaire de ladite porte (2), assurant en jet direct la continuité de la surface (18) radialement extérieure du conduit (15) de flux et découvrant en position de jet inversé un passage constitué par un orifice (12) ménagé dans la zone aval de ladite porte (2) et laissant passer une partie de flux (17) dite de fuite, un rebord (3a) solidaire de la structure fixe aval (3) de l'inverseur obturant en outre ledit orifice (12) en jet direct de manière à assurer la continuité de l'enveloppe extérieure de nacelle.

3. Inverseur de poussée de turboréacteur à double flux selon la revendication 2 dans lequel ledit volet mobile (10) est muni d'un déflecteur (19) canalisant ledit flux de fuite (17) vers l'orifice (12) en jet inversé.

4. Inverseur de poussée de turboréacteur à double flux selon l'une des revendications 2 ou 3 dans lequel ledit volet mobile (10) est relié par au moins une bielle (21) au vérin (8) de manoeuvre de la porte.

5. Inverseur de poussée de turboréacteur à double flux selon l'une quelconque des revendications 2 à 4 dans lequel ledit orifice (12) est délimité par un voile amont (14) constituant l'extrémité de la partie structurale aval de la porte (2), par un voile aval (13) qui en coopération avec au moins deux voiles (16) disposés dans le sens longitudinal assure la déviation et le guidage du flux de fuite (17) de manière à réduire ou supprimer la poussée résiduelle dans la partie arrière du conduit de flux.

6. Inverseur de poussée de turboréacteur à double flux selon la revendication 2 dans lequel ledit volet mobile (23) est ouvert en jet inversé, dégageant le passage par ledit orifice (12), sous l'effet de la pression du flux et est maintenu en jet direct en obturant ledit orifice (12) grâce à un moyen de butée (24) solidaire de la structure fixe aval (3) de l'inverseur.

7. Inverseur de poussée de turboréacteur à double flux selon la revendication 1 dans lequel ledit passage est constitué par au moins un orifice (12) délimité par un voile amont (14) constituant l'extrémité de la partie structurale aval de la porte (2) et par un voile aval (13), ledit orifice (12) étant obturé en jet direct par un carénage (28) relié à la structure fixe aval (3) d'inverseur par au moins un support (27).

8. Inverseur de poussée de turboréacteur à double flux selon la revendication 1 comportant en outre un panneau (29) associé à chaque porte, disposé en aval de ladite porte, supporté par un pivot (36) porté par la structure fixe de l'inverseur et relié à ladite porte (2) par un moyen mécanique articulé tel que bielle (31), dans lequel ledit passage en jet inversé est ménagé entre une paroi aval (14) constituant l'extrémité structurale aval de la porte (2) et la paroi radialement intérieure (64) du conduit (15) de flux de manière que le flux de fuite est dévié par ledit panneau aval (29).

9. Inverseur de poussée de turboréacteur à double flux selon la revendication 8 dans lequel une partie (41) de capotage extérieur est solidarisée au panneau aval (29) par au moins un voile (42) de manière à dégager en jet inversé une ouverture (44) d'évacuation du flux de fuite.

10. Inverseur de poussée de turboréacteur à double flux selon la revendication 9 dans lequel les positions du pivot (36) et de la bielle de liaison (31) du panneau aval (29) sont déterminées de manière que le panneau aval (29) prend la position correspondant au jet inversé par rotation vers l'aval de manière à assurer un guidage du flux de fuite (17) par la paroi interne (37) du panneau aval (29) et une aspiration de flux froid aval (50) circulant dans la partie extérieure du panneau aval (29) pour être évacué par ladite ouverture extérieure (44) en même temps que le flux de fuite (17).

11. Inverseur de poussée de turboréacteur à double flux selon la revendication 1 dans lequel chaque porte comporte une cavité (54) ménagée sur sa face radialement extérieure dans laquelle est placée en jet direct un volet mobile (51) assurant la continuité de la surface extérieure de nacelle dans le prolongement de la partie extérieure (4) de porte et formant l'extrémité aval de l'inverseur ainsi que la partie aval de la surface radialement extérieure du conduit (15) du flux tandis qu'en jet inversé ledit passage est formé entre la porte (2) et ledit volet (51) qui assure le guidage du flux de fuite (17) après pivotement autour d'un axe pivot (53) porté par la structure fixe d'inverseur sous l'action d'une bielle de liaison (52) à la porte (2).

12. Inverseur de poussée de turboréacteur à double flux selon la revendication 1 dans lequel la partie extérieure (4) de la porte (2) comporte du côté aval un premier volet mobile (72) articulé autour d'un axe pivot (71) solidaire de ladite porte (2) et la partie intérieure (5) de la porte (2) comporte du côté aval un second volet mobile (76) articulé autour d'un axe pivot (77) solidaire de ladite porte (2), lesdits premier (72) et second (76) volets étant susceptibles sous l'action d'un vérin (70) indépendant installé à l'intérieur de la porte (2) d'ouvrir dans la porte (2) ledit passage délimité par lesdits volets (72, 76) du côté amont et par une paroi (74) disposé du côté aval entre les surfaces intérieure (5) et extérieure (4) de la porte (2) de manière à laisser passer le flux de fuite (17) en jet inversé.

13. Inverseur de poussée de turboréacteur à double flux selon la revendication 2 dans lequel ledit volet mobile (23) lors de la manoeuvre d'ouverture de la porte (2) vient en appui à son extrémité aval (23a) sur le profil externe du capot primaire (64) du turboréacteur de manière à pivoter autour de son axe (22) en découvrant ledit passage (12).

14. Inverseur de poussée de turboréacteur à double flux selon l'une des revendications 2 ou 13 dans lequel ledit orifice (12) est délimité par un voile aval (13) portant un voile (13a) qui découvre lors de l'ouverture de la porte (2) un orifice (3b) ménagé dans ledit rebord (3a) de structure fixe aval (3) et qui recouvre ledit orifice (3b) en jet direct.

15. Inverseur de poussée de turboréacteur à double flux selon la revendication 1 comportant en outre un panneau (81) associé à chaque porte (2), disposé en aval de ladite porte, supporté par un parallélogramme constitué d'au moins une paire de bielles (84,85) reliant ledit panneau(81) à la porte (2) et relié par une bielle (83) au vérin (8) de manoeuvre de la porte (2) de manière que ledit passage en jet inversé est ménagé entre un voile aval (14) d'extrémité de la porte (2) et la paroi radialement intérieure (64) du conduit (15), le flux de fuite étant dévié par ledit panneau aval (81).

16. Inverseur de poussée de turboréacteur à double flux selon la revendication 1 dans lequel chaque porte comporte à son extrémité aval une structure mobile (65) déplacée en translation par rapport à la porte lors de l'ouverture de ladite porte (2).

17. Inverseur de poussée de turboréacteur à double flux selon la revendication 16 dans lequel ladite structure mobile (65) porte au moins une aube déflectrice se plaçant dans ledit passage lors de l'ouverture de la porte (2).

18. Inverseur de poussée de turboréacteur à double flux selon l'une des revendications 16 ou 17 dans lequel ladite structure mobile (65) comporte dans sa partie aval un capotage (68) assurant en position de jet direct la continuité de la ligne externe de la nacelle.

19. Inverseur de poussée de turboréacteur à double flux selon la revendication 1 dans lequel une pluralité de jets d'air (67) prélevés à partir du flux primaire du turboréacteur dévient ledit flux de fuite (17) lors du fonctionnement en inversion de poussée.

## Patentansprüche

1. Schubumkehrvorrichtung für Zweikreis-TL-Triebwerk mit Schwenkklappen (2), die sich in Schließstellung im Direktstrahlbetrieb in die Außenwand der Strömungsleitung hinter dem Turbotriebwerks-Gebläse einfügen und aus einem äußeren Teil (4) und einem inneren Teil (5) bestehen, wobei sie ferner alle bei Umkehrschubbetrieb unter der Einwirkung eines Bewegungs-Steuermittels wie z. B. eines Zylinders (8) um Drehachsen (20) schwenken, die an dem festen Aufbau der Schubumkehrvorrichtung sitzen, so dass sie Stromumlenkhindernisse bilden,
**dadurch gekennzeichnet,**
**dass** mindestens eine Klappe (2) im hinteren Bereich einen Durchgang (12) enthält, der den inneren Teil (5) und den äußeren Teil (4) der Klappe vollständig durchquert und dessen Geometrie dergestalt ausgeführt ist, dass bei Umkehrschubbetrieb hinter und außerhalb der Klappe (2) ein Leckstrom (17) in gesteuerter Menge und gesteuerter Richtung ermöglicht wird, wobei Mittel (10) diesen Durchgang (12) im Direktstrahlbetrieb verschließen, so dass die Kontinuität der radial äußeren Fläche (18) der Strömungsleitung (15) gewährleistet ist.

2. Schubumkehrvorrichtung für Zweikreis-TL-Triebwerk nach Anspruch 1, bei der der innere Teil der Klappe hinten eine bewegliche Klappe (10; 23) aufweist, die um eine mit der Klappe (2) fest verbundene Drehachse (11; 22) schwenkbar angelenkt ist, im Direktstrahlbetrieb die Kontinuität der radial äußeren Fläche (18) der Strömungsleitung (15) gewährleistet und in Umkehrschubstellung einen Durchgang freigibt, der aus einer Öffnung (12) besteht, die im hinteren Bereich dieser Klappe (2) ausgeführt ist und einen Teil des sogenannten Leckstroms (17) durchlässt, wobei eine Randleiste (3a), die mit dem hinteren festen Aufbau (3) der Schubumkehrvorrichtung fest verbunden ist, ferner im Direktstrahlbetrieb diese Öffnung (12) verschließt, so dass die Kontinuität des Außenmantels der Gondel gewährleistet ist.

3. Schubumkehrvorrichtung für Zweikreis-TL-Triebwerk nach Anspruch 2, bei der diese bewegliche Klappe (10) mit einem Deflektor (19) versehen ist, der diesen Leckstrom (17) im Schubumkehrbetrieb zu der Öffnung (12) führt.

4. Schubumkehrvorrichtung für Zweikreis-TL-Triebwerk nach einem der Ansprüche 2 oder 3, bei der diese bewegliche Klappe (10) durch mindestens eine Stange (21) mit dem Steuerzylinder (8) der Klappe (2) verbunden ist.

5. Schubumkehrvorrichtung für Zweikreis-TL-Triebwerk nach einem der Ansprüche 2 bis 4, bei der die genannte Öffnung (12) von einer vorderen Blende (14) beschränkt wird, die das Ende des hinteren Aufbauteils der Klappe (2) bildet, sowie von einer hinteren Blende (13) beschränkt wird, die in Zusammenwirkung mit mindestens zwei seitlichen, in Längsrichtung angeordneten Blenden (16) die Umlenkung und Führung des Leckstroms (17) gewährleistet, so dass der Restschub in dem hinteren Teil der Strömungsleitung verringert oder beseitigt wird.

6. Schubumkehrvorrichtung für Zweikreis-TL-Triebwerk nach Anspruch 2, bei der diese bewegliche Klappe (23) im Schubumkehrbetrieb unter der Einwirkung des Drucks der Strömung geöffnet wird, wobei sie den Durchgang durch die Öffnung (12) freigibt, und im Direktstrahlbetrieb durch ein Anschlagmittel (24), das mit dem hinteren festen Aufbau (3) der Schubumkehrvorrichtung fest verbunden ist, festgehalten wird, wobei sie diese Öffnung (12) verschließt.

7. Schubumkehrvorrichtung für Zweikreis-TL-Triebwerk nach Anspruch 1, bei der dieser Durchgang aus mindestens einer Öffnung (12) besteht, die von einer vorderen Blende (14) beschränkt wird, die das Ende des hinteren Aufbauteils der Klappe (2) bildet, sowie von einer hinteren Blende (13) beschränkt wird, wobei diese Öffnung (12) im Direktstrahlbetrieb von einer Verkleidung (28) verschlossen wird, die durch mindestens einen Träger (27) mit dem hinteren festen Aufbau (3) der Schubumkehrvorrichtung verbunden ist.

8. Schubumkehrvorrichtung für Zweikreis-TL-Triebwerk nach Anspruch 1, die ferner eine Platte (29) aufweist, die mit jeder Klappe (2) verbunden ist, hinter dieser Klappe angeordnet ist, von einem Drehzapfen (36) getragen wird, der an dem festen Aufbau der Schubumkehrvorrichtung sitzt, und mit dieser Klappe (2) durch ein angelenktes mechanisches Mittel wie z. B. eine Stange (31) verbunden ist, wobei dieser Durchgang im Schubumkehrbetrieb zwischen einer hinteren Wand (14), die das Ende des hinteren Aufbauteils der Klappe (2) bildet, und der radial inneren Wand (64) der Strömungsleitung (15) ausgeführt ist, so dass der Leckstrom von dieser hinteren Platte (29) umgelenkt wird.

9. Schubumkehrvorrichtung für Zweikreis-TL-Triebwerk nach Anspruch 8, bei der ein Teil (41) der Außenverkleidung an der hinteren Platte (29) durch mindestens eine Blende (42) fest angebracht wird, so dass im Schubumkehrbetrieb eine Auslassöffnung (44) für den Leckstrom freigegeben wird.

10. Schubumkehrvorrichtung für Zweikreis-TL-Triebwerk nach Anspruch 9, bei der die Positionen des Drehzapfens (36) und der Verbindungsstange (31) der hinteren Platte (29) dergestalt bestimmt sind, dass die hintere Platte (29) die der Umkehrschubstellung entsprechende Position durch Drehung nach hinten einnimmt, so dass eine Führung des Leckstroms (17) durch die innere Wand (37) der hinteren Platte (29) gewährleistet ist, sowie ein Ansaugen des hinteren Mantelsttoms (50), der in dem äußeren Teil der hinteren Platte (29) zirkuliert, um durch die äußere Öffnung (44) gleichzeitig mit dem Leckstrom (17) ausgelassen zu werden.

11. Schubumkehrvorrichtung für Zweikreis-TL-Triebwerk nach Anspruch 1, bei der jede Klappe (2) einen Hohlraum (54) enthält, der an ihrer radial äußeren Seite ausgeführt ist und in den im Direktstrahlbetrieb eine bewegliche Klappe (51) placiert wird, die die Kontinuität der Außenfläche der Gondel in der Verlängerung des äußeren Klappenteils (4) gewährleistet und das hintere Ende der Schubumkehrvorrichtung sowie den hinteren Teil der radial äußeren Wand der Strömungsleitung (15) bildet, während dieser Durchgang im Schubumkehrbetrieb zwischen der Klappe (2) und der genannten Klappe (51) gebildet wird, die die Führung des Leckstroms (17) nach Schwenken um eine an dem festen Aufbau der Schubumkehrvorrichtung sitzende Drehachse (53) unter Einwirkung einer Verbindungsstange (52) zu der Klappe (2) gewährleistet.

12. Schubumkehrvorrichtung für Zweikreis-TL-Triebwerk nach Anspruch 1, bei der der äußere Teil (4) der Klappe (2) hinten eine erste bewegliche Klappe (72) aufweist, die um eine mit dieser Klappe (2) fest verbundene Drehachse (71) angelenkt ist, und bei der der innere Teil (5) der Klappe (2) hinten eine zweite bewegliche Klappe (76) aufweist, die um eine mit dieser Klappe (2) fest verbundene Drehachse (77) angelenkt ist, wobei die erste Klappe (72) und die zweite Klappe (76) geeignet sind, unter der Einwirkung eines unabhängigen Zylinders (70), der im Inneren der Klappe (2) eingebaut ist, in der Klappe (2) den genannten Durchlass zu öffnen, der von diesen Klappen (72, 76) vorne und von einer hinten zwischen der inneren Fläch (5) und der äußeren Fläche (4) der Klappe (2) angeordneten Wand (74) begrenzt wird, so dass der Leckstrom (17) im Schubumkehrbetrieb durchgelassen wird.

13. Schubumkehrvorrichtung für Zweikreis-TL-Triebwerk nach Anspruch 2, bei der die genannte bewegliche Klappe (23) beim Öffnungsvorgang der Klappe (2) mit ihrem hinteren Ende (23a) an dem Außenprofil des Hauptmantels (64) des Turbotriebwerks dergestalt in Anlage kommt, dass sie um ihre Achse (22) schwenkt und dabei den Durchgang (12) freigibt.

14. Schubumkehrvorrichtung für Zweikreis-TL-Triebwerk nach einem der Ansprüche 2 oder 13, bei der diese Öffnung (12) von einer hinteren Blende (13) beschränkt wird, auf der eine Blende (13a) sitzt, die beim Öffnen der Klappe (2) eine Öffnung (3b) freigibt, die in der Randleiste (3a) des hinteren festen Aufbaus (3) ausgeführt ist, und die diese Öffnung (3b) im Direktstrahlbetrieb überdeckt.

15. Schubumkehrvorrichtung für Zweikreis-TL-Triebwerk nach Anspruch 1, die ferner in Verbindung mit jeder Klappe (2) eine Platte (81) aufweist, die hinter der Klappe (2) angeordnet ist, von einem Parallelogramm gehalten wird, das mindestens aus einem Paar Stangen (84, 85) besteht, die diese Platte (81) mit der Klappe (2) verbinden, und durch eine Stange (83) dergestalt mit dem Steuerzylinder (8) der Klappe (2) verbunden ist, dass der genannte Durchgang im Schubumkehrbetrieb zwischen einer hinteren Endblende (14) der Klappe (2) und der radial inneren Wand (64) der Strömungsleitung (15) ausgeführt ist, wobei der Leckstrom von dieser hinteren Platte (81) umgelenkt wird.

16. Schubumkehrvorrichtung für Zweikreis-TL-Triebwerk nach Anspruch 1, bei der jede Klappe (2) an ihrem hinteren Ende einen beweglichen Aufbau (65) aufweist, der beim Öffnen dieser Klappe (2) in Vorschubbewegung zu der Klappe verschoben wird.

17. Schubumkehrvorrichtung für Zweikreis-TL-Triebwerk nach Anspruch 16, bei der dieser bewegliche Aufbau (65) mindestens eine Umlenkschaufel trägt, die sich beim Öffnen der Klappe (2) in diesen Durchgang schiebt.

18. Schubumkehrvorrichtung für Zweikreis-TL-Triebwerk nach einem der Ansprüche 16 oder 17, bei der dieser bewegliche Aufbau (65) in seinem hinteren Teil eine Verkleidung (68) aufweist, die im Direktstrahlbetrieb die Kontinuität der Außenlinie der Gondel gewährleistet.

19. Schubumkehrvorrichtung für Zweikreis-TL-Triebwerk nach Anspruch 1, bei der aus einer Vielzahl von Luftstrahlen (67), die aus dem Primärstrom des Turbotriebwerks entnommen wurden, im Schubumkehrbetrieb dieser Leckstrom (17) wird.

## Claims

1. Bypass turbojet thrust reverser comprising pivoting doors (2), in the closed position, during operation in direct jet mode, incorporating themselves into the outer wall of the flow duct behind the turbojet fan, consisting of an outer part (4) and of an inner part (5) and each one also pivoting about pivots (20) borne by the fixed structure of the reverser under the action of a movement-control means such as a ram (8) so as to constitute obstacles deflecting the flow during operation in reverse thrust mode, **characterized in that** at least one door (2) has, in a downstream region, a passage (12) passing completely through the inner part (5) and the outer part (4) of the door, the geometry of which part is tailored to allow a leakage flow (17) to the rear and to the outside of the door (2), with a controlled direction and controlled flow rate during operation in reverse thrust mode, means (10) blocking off the said passage (12) during operation in direct jet mode so as to ensure the continuity of the radially outer surface (18) of the flow duct (15).

2. Bypass turbojet thrust reverser according to Claim 1 in which the inner part of the door comprises, on the downstream side, a moving flap (10; 23) articulated about a pivot pin (11; 22) secured to the said door (2) ensuring, in direct jet mode, the continuity of the radially outer surface (18) of the flow duct (15) and in reverse jet mode uncovering a passage consisting of an orifice (12) formed in the downstream region of the said door (2) and allowing part of the flow (17), known as the leakage flow, to pass, a rim (3a) secured to the downstream fixed structure (3) of the reverser also blocking off the said orifice (12) in direct jet mode so as to ensure continuity of the outer envelope of the engine pod.

3. Bypass turbojet thrust reverser according to Claim 2 in which the said moving flap (10) is fitted with a deflector (19) channelling the said leakage flow (17) towards the orifice (12) in reverse jet mode.

4. Bypass turbojet thrust reverser according to one of Claims 2 and 3, in which the said moving flap (10) is connected by at least one link rod (21) to the ram (8) that operates the door.

5. Bypass turbojet thrust reverser according to any one of claims 2 to 4 in which the said orifice (12) is delimited by an upstream partition (14) constituting the end of the downstream structural part of the door (2), by a downstream partition (3) which, in collaboration with at least two partitions (16) arranged in the longitudinal direction diverts and guides the leakage flow (17) so as to reduce or eliminate the residual thrust in the rear part of the flow duct.

6. Bypass turbojet thrust reverser according to Claim 2 in which the said moving flap (23) is open in reverse jet mode, uncovering the passage through the said orifice (12), under the effect of the pressure of the flow and is kept, in direct jet mode, blocking the said orifice (12) by virtue of a stop means (24) secured to the downstream fixed structure (3) of the reverser.

7. Bypass turbojet thrust reverser according to Claim 1 in which the said passage consists of at least one orifice (12) delimited by an upstream partition (14) constituting the end of the downstream structural part of the door (2) and by a downstream partition (13), the said orifice (12) being blocked off in direct jet mode by a fairing (28) connected to the downstream fixed structure (3) of the reverser by at least one support (27).

8. Bypass turbojet thrust reverser according to Claim 1 further comprising a panel (29) associated with each door, arranged downstream of the said door, supported by a pivot (36) borne by the fixed structure of the reverser and connected to the said door (2) by an articulated mechanical means such as a link rod (31), in which reverser the said passage in reverse jet mode is formed between a downstream wall (14) constituting the downstream structural end of the door (2) and the radially inner wall (64) of the flow duct (15) so that the leakage flow is deflected by the said downstream panel (29).

9. Bypass turbojet thrust reverser according to Claim 8 in which part (41) of the outer cowling is secured to the downstream panel (29) by at least one partition (42) so as, in reverse jet mode, to uncover an opening (44) for the removal of the leakage flow.

10. Bypass turbojet thrust reverser according to Claim 9 in which the positions of the pivot (36) and of the link rod (31) for connection of the downstream panel (29) are determined so that the downstream panel (29) adopts the position corresponding to the reverse jet mode by rotation in the downstream direction so that the leakage flow (17) is guided by the internal wall (37) of the downstream panel (29) and the downstream cold flow (50) flowing through the outer part of the downstream panel (29) is sucked in to be removed through the said outer opening (44) with the leakage flow (17).

11. Bypass turbojet thrust reverser according to Claim 1 in which each door comprises a cavity (54) made on its radially outer face in which, in direct jet mode, there is placed a moving flap (51) providing continuity of the outer surface of the engine pod in the continuation of the outer part (4) of the door and forming the downstream end of the reverser and the downstream part of the radially outer surface of the flow duct (15) whereas in reverse jet mode, the said passage is formed between the door (2) and the said flap (51) which guides the leakage flow (17) after pivoting about a pivot pin (53) borne by the fixed structure of the reverser under the action of a link rod (52) connected to the door (2).

12. Bypass turbojet thrust reverser according to Claim 1 in which the outer part (4) of the door (2) comprises, on the downstream side, a first moving flap (72) articulated about a pivot pin (71) secured to the said door (2) and the inner part (5) of the door (2) comprises, on the downstream side, a second moving flap (76) articulated about a pivot pin (77) secured to the said door (2), the said first (72) and second (76) flaps being able, under the action of an independent ram (70) installed inside the door (2), to open into the door (2) the said passage delimited by the said flaps (72, 76) on the upstream side and by a wall (74) arranged on the downstream side between the inner (5) and outer (4) surfaces of the door (2) so as to allow the leakage flow (17) to pass in reverse jet mode.

13. Bypass turbojet thrust reverser according to Claim 2 in which the said moving flap (23) when the manoeuvre is performed to open the door (2), comes to bear at its downstream end (23a) on the outer profile of the primary cap (64) of the turbojet engine so as to pivot about its pin (22), uncovering the said passage (12).

14. Bypass turbojet thrust reverser according to one of Claims 2 and 13, in which the said orifice (12) is delimited by a downstream partition (13) bearing a partition (13a) which when the door (2) is opened uncovers an orifice (3b) made in the said rim (3a) of the downstream fixed structure (3) and which in direct jet mode re-covers the said orifice (3b).

15. Bypass turbojet thrust reverser according to Claim 1 further comprising a panel (81) associated with each door (2) and arranged downstream of the said door, supported by a parallelogram consisting of at least one pair of link rods (84, 85) connecting the said panel (81) to the door (2) and connected by a link rod (83) to the ram (8) that operates the door (2) so that in reverse jet mode the said passage is formed between a downstream partition (14) at the end of the door (2) and the radially inner wall (64) of the duct (15), the leakage flow being deflected by the said downstream panel (81).

16. Bypass turbojet thrust reverser according to Claim 1 in which each door at its downstream end comprises a moving structure (65) moved in translation with respect to the door when the said door (2) is opened.

17. Bypass turbojet thrust reverser according to Claim 16 in which the said moving structure (65) bears at least one deflector vane which places itself in the said passage when the door (2) is opened.

18. Bypass turbojet thrust reverser according to one of Claims 16 and 17, in which the said moving structure (65) comprises, in its downstream part, a cowling (68) which, in direct jet position, ensures the continuity of the external lines of the engine pod.

19. Bypass turbojet thrust reverser according to Claim 1 in which a plurality of air jets (67) tapped off the core flow through the turbojet deflect the said leakage flow (17) during operation in reverse thrust mode.
